# EUROPÄISCHE PATENTSCHRIFT

(11) **EP 1 191 328 B1**
(45) Veröffentlichungstag und Bekanntmachung des Hinweises auf die Patenterteilung: **07.10.2009**
(21) Anmeldenummer: 01115861.5
(22) Anmeldetag: 29.06.2001
(51) Int. Cl.: G01N 23/04, G07C 9/00

(54) **Bedieneinheit für ein Röntgenprüfgerät**
Control system for an x-ray testing device
Système de commande pour un appareil de test par rayons X

(30) Priorität: 30.08.2000 DE 10042856
(43) Veröffentlichungstag der Anmeldung: 27.03.2002
(73) Patentinhaber: Smiths Heimann GmbH, 65205 Wiesbaden (DE)
(72) Erfinder: Meder, Claus, 64380 Rossdorf (DE)
(74) Vertreter: Dietrich, Barbara

(56) Entgegenhaltungen:
- EP-A- 0 393 784
- EP-A- 0 716 399
- WO-A-98/12670
- DE-A- 3 436 444
- DE-A- 19 625 410
- DE-C- 19 910 615
- US-A- 5 202 550

## Beschreibung

Die Erfindung betrifft eine Bedieneinheit für ein Röntgenprüfgerät nach dem Oberbegriff des Patentanspruches 1.

In der DE 199 10 615 C1 ist ein Bedienplatz für ein Röntgenprüfgerät offenbart. Bekanntermaßen wechseln sich an solch einem Röntgenprüfgerät mehrere Bedienpersonen in regelmäßigen oder unregelmäßigen Zeitabständen ab.

Zur Identifikation der einzelnen Bedienperson wird ein Zifferncode über ein Bedienfeld in das Bediensystem eingegeben, der einer jeweiligen Bedienperson individuell zugeordnet wird. Der Nachteil dieser Eingabeart liegt u. a. darin, dass sich verschiedene Bedienpersonen unter einem gleichlautenden Zifferncode in das Bediensystem anmelden können, ohne dass das Bediensystem dieses mitbekommt und somit eine statistische Einzelerfassung pro Bedienperson verfälscht wird.

Die DE 196 25 410 A1 betrifft ein Verfahren zur Konfiguration einer rechnergestützten medizinischen Diagnoseanlage, mit wenigstens einem Teil der für eine messende Untersuchung erforderlichen Daten. Zum Betrieb der Anlage wird diese abhängig von patientenspezifischen und benutzerspezifischen Daten konfiguriert, Insbesondere für das Einstellen Individueller Einstellungsparameter werden diese abgespeichert, sodass die abgespeicherten Daten dazu genutzt werden, diese automatisch auszulesen und somit die gesamte Anlage allein durch den Rückgriff vollumfänglich konfiguriert ist, ohne dass umständlich und stets wiederkehrende Einstellungen erforderlich wären. Unter Zwischenschaltung eines Codewortes oder ähnliches wird nur der autorisierten Person der Zugriff auf diese Daten ermöglicht. Das Speichermittel kann auch personenspezifische Daten enthalten, wie Name des Bedieners oder Dauer der Strahlenexposition, d.h., die Zeit, welche die Bedienperson an der Anlage gearbeitet hat bzw. wie lange sie tatsächlich einer Röntgenstrahlung ausgesetzt war. Beim Speichermittel handelt es sich um eine Chip oder Magnetkarte.

Auch die WO 98/12670 A1 beschreibt ein tragbares biometrisches Identifikationssystem mit einem Sensor zur Erstellung von Fingerabdrücken sowie Auswertungsmitteln zur Feststellung, ob die Person für den Zugang autorisiert ist. Das tragbare System kann beispielsweise in eine Kreditkarte implementiert werden.

Hieraus ergibt sich die Aufgabe der Erfindung, eine Bedienperson im Bediensystem eindeutig identifizieren zu können.

Gelöst wird die Aufgabe durch die Merkmale des Patentanspruchs 1.

Der Erfindung liegt die Idee zugrunde, in eine Röntgenprüfanlage bzw. in ein Röntgenprüfgerät ein eindeutig arbeitendes Identifikationssystem einzubinden, so dass sich jede Bedienperson nur mit einer eigenen, individuellen Identifikationseinrichtung in das Bediensystem anmelden kann. Diese Identifikationseinrichtung wird vom Gegengerät des Identifikationssystems gelesen und ggf. wieder beschrieben. Durch diesen Vorgang kann dann beispielsweise das Betriebssystem freigeschaltet werden. Beim Verlassen des Bediensystems wird mit Entnahme der Identifikationseinrichtung bzw. mit Verlassen eines definierten Nahbereiches um das Röntgenprüfgerät diese Bedienperson abgemeldet und das Bediensystem für eine weitere Bedienperson zugänglich gemacht. Das Bediensystem bleibt somit vorzugsweise nur mit Hilfe der funktionsfähigen Identifikationseinrichtung betriebsfähig

Um zu vermeiden, dass beim Verlassen des Bereiches bzw, des Röntgenprüfgerätes selbst die Individuelle Identifikationseinrichtung im Bediensystem unbewusst verbleibt, kann diese mechanisch, beispielsweise ober eine Kette, mit der Bedienperson verbunden sein. Bei einer berührungslosen Identiflkationseinrichtung wird beispielsweise ein Nahbereich vorgegeben, in dem sich die Bedienperson befinden muss, damit das Betriebssystem aktiv bleibt. Wird dieser verlassen, erfolgt ein automatisches Abmelden der Bedienperson und eine Freischaltung des Betriebssystems für eine weitere Bedienperson, wozu das Betriebssystem in einen Stand-by-Zustand gefahren wird.

Die Identifikationseinrichtung kann dabei eine kontaktgebundene Einrichtung, beispielsweise eine Chip-Karte, Magnetkarte oder ähnliches sein, wobei hier ein Kartangerät als Gegengerät des Identiflkationssysteme fungiert. Bei einem berührungslos arbeitenden Identifikationssystem, beispielsweise über elektromagnetische Strahlungen, ist die Identifikationseinrichtung eine kleine Sende-/ Empfangseinheit oder ein Transponder. Das jeweilige Gegengerät ist auch hier der Identifikationseinrichtung angepasst. Auch eine kontaktgebundene oder kontaktlose Identifikationseinrichtung, die nach einem induktiven Prinzip arbeitet, kann vorgesehen sein.

In einer weiteren vorteilhaften Ausführung ist die Identifikationseinrichtung beschreibbar. Durch die Beschreibbarkeit der Identifikationseinrichtung sind Einzelstatistiken bzw. Daten abspeicherbar, die beispielsweise bei Schulungen oder in der Praxis aufgezeichnet werden.

Weiterhin kann jede Bedienperson ihrer Identifikationseinrichtung eine individuelle Geräteeinstellung aufprogrammieren, z.B. eine Tastenverwaltung, wodurch je nach individueller Gewohnheit die Bedienperson vorrangige Funktionen auf frei belegbare Tasten eines Bedienfeldes legen kann.

Auch können Geräteparameter, die sich jede Bedienperson individuell vorgibt, auf der Identifikationseinrichtung gespeichert werden. Dies sind beispielsweise die Heiligkeit eines Bildschirms, die Farbskalierung und/oder Grauwertdarstellung oder ergonomische Daten.

Vorzugsweise ist das Gegengerät für die individuelle Identifikationseinrichtung im Bedienfeld integriert.

Um zu vermeiden, dass beim Verlassen des Bereiches bzw. des Röntgenprüfgerätes selbst die individuelle identifikationseinrichtung im Bediensystem unbewusst verbleibt, kann diese mechanisch, beispielsweise über eine Kette, mit der Bedienperson verbunden sein. Bei einer berührungslosen Identifikationseinrichtung wird beispielsweise ein Nahbereich vorgegeben, In dem sich die Bedienperson befinden muss, damit das Betriebssystem aktiv bleibt. Wird dieser verlassen, erfolgt ein automatisches Abmelden der Bedienperson und eine Freischaltung des Betriebssystems für eine weitere Bedienperson, wozu das Betriebssystem in einen Stand-by-Zustand gefahren wird.

Zusätzlich kann die Identifikationseinrichtung auch als Betriebszugangskarte für andere Objekte, Anlagen, Firmenbereiche usw. mitbenutzt werden.

Die Nutzung der externen Speicherung von Statistik- oder personengebundenen Daten auf der Identifikationseinrichtung hat u. a. den großen Vorteil, dass bei bzw. trotz Ausfall des Röntgenprüfgerätes die Daten verfügbar bleiben. Ferner können diese Daten an verschiedenen Geräten aufgezeichnet werden und in bzw. mittels der Identifikationseinrichtung zentral gespeichert werden.

Anhand eines Ausführungsbeispiels mit Zeichnung soll die Erfindung näher erläutert werden. Es zeigt:
- Figur 1: einen Monitor und ein Bedienfeld als Bedieneinheit eines Röntgenprüfgerätes
- Figur 2: in einer Draufsicht-Darstellung einen Wirkbereich einer berührungslos arbeitenden Smart Karte

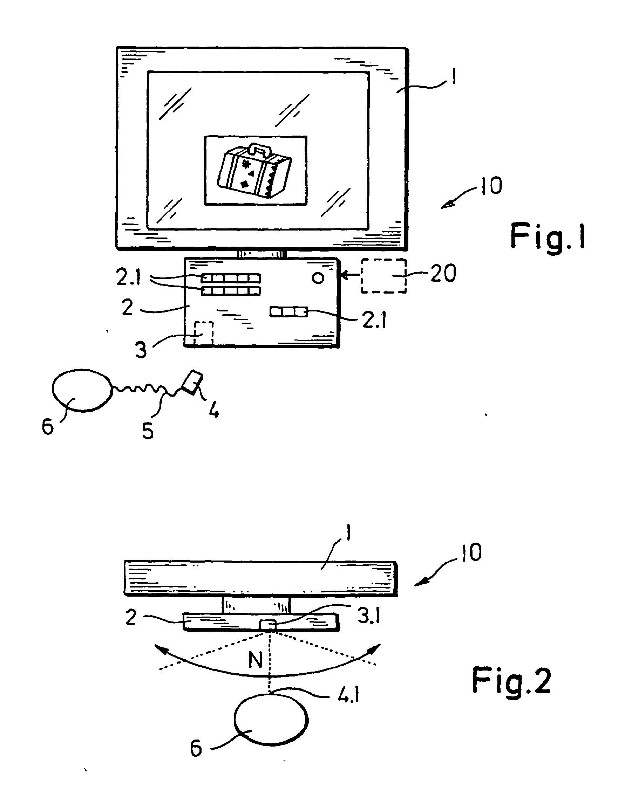

In Figur 1 ist mit 1 ein Monitor eines nicht näher dargestellten Röntgenprüfgerätes gekennzeichnet. Mit dem Monitor 1 und dem Betriebssystem des Röntgenprüfgerätes ist ein Bedienfeld 2 verbunden, über welches das Betriebssystem gesteuert bzw. das Röntgenprüfgerät bedient wird. Über ein Identifikationssystem, bestehend aus einer Identifikationseinrichtung 4 und einem Gegengerät 3, erfolgt eine eindeutige Identifizierung einer Bedienperson 6. Dabei ist das Gegengerät 3 vorzugsweise im Bedienfeld 2 integriert. Die Identifikationseinrichtung 4 ist hierbei eine kontaktgebundene Karte, welche in ein Kärtengerät als Gegengerät 3 eingeführt werden kann. Das Kartengerät 3 kann diese kontaktgebundene Karte 4 lesen und in einer weiteren vorteilhaften Ausführung auch beschreiben. Die Identifikationseinrichtung 4 ist hierbei vorzugsweise über eine kettenähnliche Verbindung 5 mechanisch mit der Bedienperson 6 verbunden.

Mit Einbringen der kontaktgebundenen Identifikationseinrichtung 4 in das Kartengerät 3 wird das Betriebssystem des Röntgenprüfgerätes, welches sich zuvor in einem ruhenden, d. h. Stand-by-Zustand befindet, angestoßen. Gleichzeitig wird beispielsweise das Bedienfeld 2 zum Betätigen von Tasten 2.1 freigeschaltet. Mit Entnahme der Identifikationseinrichtung 4 aus dem Kartengerät 3 erfolgt eine Deaktivierung des Betriebssystems, welches wieder in den Stand-by-Zustand gelangt. Dieser kann durch ein manuelles Abmelden der Bedienperson 6 oder automatisch erreicht werden. Betriebsfähig bleibt das Bediensystem und damit das Röntgenprüfgerät nur so lange, wie sich die Identifikationseinrichtung 4 im Kartengerät 3 befindet.

Eine weitere Variante zeigt Figur 2. Hierbei arbeitet das Identifikationssystem berührungslos, beispielsweise über Funk oder Infrarot-Strahlung. Das Gegengerät 3.1 steht dabei mit einer Sende-/Empfangseinheit als Identifikationseinrichtung 4.1 elektrisch in Verbindung, wodurch diese Sende-/Empfangseinheit 4.1 vom Gegengerät 3.1 gelesen und vorzugsweise auch beschrieben werden kann. Die Betriebsfähigkeit des Betriebssystems wird in einem vorab definierten Nahbereich N gewährleistet. Verlässt die Bedienperson 6 den Nahbereich N, wird die Bedienperson 6 automatisch abgemeldet.

Es ist aber auch eine manuelle Abschaltung durch die Bedienperson 6 möglich. Um ein ungewolltes Abschalten zu vermeiden, kann ein sogenanntes Zeit-Sicherheits-Intervall Δt eingebunden werden, so dass eine Abschaltung erst nach Überschreitung dieses Zeitintervalls erfolgt. Eine solche Sicherheitsachaltung kann auch in beiden Ausführungsbeispielen eingebunden werden.

In vorteilhafter Weise kann die Bedienperson 6 die Identifikationseinrichtung 4, 4.1 dazu nutzen, frei belegbare Tasten 2.1 individuell mit von ihr vorbestimmten Befehlen/Funktionen zu belegen. Damit wird der Bedienperson 6 die Gelegenheit gegeben, häufig verwendete Funktionen, beispielsweise das Umschalten von Farbdarstellung auf Graubilddarstellung, auf die eigene Handhabung auch auf einen Linkshänder abzustimmen. Diese Funktionsbelegung der Tasten 2.1 erfolgt immer automatisch mit Anmeldung im Betriebssystem durch die Identifikationseinrichtung 4 bzw. 4.1. Dieser können aber auch Berechtigungen für das Betriebssystem des Röntgenprüfgerätes aufprogrammiert werden. Auch Geräteeinstellungen, wie beispielsweise Monitorhöhe oder Sitzposition eines ergonomischen Bedienplatzes, sind auf der Identiflkationseinrichtung 4, 4.1 abspeicherbar. Zudem ist die identifikationseinrichtung 4, 4.1 als Zugangskarte für bestimmte Firmenteile bzw. -bereiche zusätzlich nutzbar.

Es versteht sich, dass im Rahmen des erfinderischen Gedankens auch Änderungen möglich sind. So kann das Gegengerät 3, 3.1 des Identifikationssystems physisch im Röntgenprüfgerät selbst installiert sein.

Um zu vermeiden, dass nichtberechtigte Bedienpersonen eine fremde Identifikationseinrichtung 4, 4.1 verwenden, können weitere Sicherheitsmaßnahmen vorgesehen werden, die neben einem Geheimpin auch eine Identifikation über einen sogenannten LiveScanner (Fingerprinter) 20 oder ähnliches einschließen können, wie in Fig. 1 angedeutet.

### Bezugezeichenliste

- 1: Monitor
- 2: Bedienfeld
- 2.1: Tasten
- 3: Gegengerät (Kartenleser u. a.)
- 3.1: Gegengerät (Empfänger, Sender)
- 4: Identifikationseinrichtung (Karte)
- 4.1: Identifikationseinrichtung (Senden / Empfangen)
- 5: Mechanische, kettenähnliche Verbindung
- 6: Bedienperson
- 10: Bedieneinheit
- 20: Livescanner

## Patentansprüche

1. Bedieneinheit (10) für ein Röntgenprüfgerät, aufweisend ein Bedienfeld (2) zur Bedienung eines Bediensystems des Röntgenprüfgerätes sowie einen Monitor (1) zum Sichtbarmachen des Röntgenbildes für eine Bedienperson (6), wobei ein Identifikationssystem, bestehend aus einem Gegengerät (3, 3.1) und einer Identifikationseinrichtung (4, 4.1) für die Bedienperson (6) in die Bedieneinheit (10) des Röntgenprüfgerätes eingebunden ist, mit den Merkmalen:
- die Bedieneinheit (10) wird durch die Identifikationseinrichtung (4, 4.1) freigeschaltet bzw. aktiviert,
- die Identifikationseinrichtung (4) ist eine kontaktgebundene oder eine berührungslose Identifikationseinrichtung, wobei
- die Identifikationseinrichtung (4) über eine mechanische Verbindung (5) mit der Bedienperson (6) verbunden ist und
- bei der berührungslosen Verbindung diese zwischen der Identifikationseinrichtung (4.1) und dem Gegengerät (3.1) innerhalb eines Nahbereiches (N) aufrechterhalten wird, und
- beim Verlassen des Nahbereichs oder Entnahme der Identifikationseinrichtung ein automatisches Abmelden der Bedienperson (6) und eine Freischaltung des Betriebssystems für eine weitere Bedienperson erfolgt, wozu das Betriebssystem in einen Stand-by-Zustand gefahren wird,
wobei
- um ein ungewolltes Abschalten zu vermeiden, ein sogenanntes Zeit-Sicherheits-Intervall (Δt) eingebunden wird, so dass eine Abschaltung erst nach Überschreitung dieses Zeitintervalls (Δt) erfolgt.

2. Bedieneinheit nach Anspruch 1, **dadurch gekennzeichnet, dass** die kontaktgebundene Identifikationseinrichtung (4) als Chipkarte oder Magnetkarte ausgeführt ist und als Gegengerät (3) ein Kartengerät fungiert.

3. Bedieneinheit nach Anspruch 1, **dadurch gekennzeichnet, dass** die Identifikationseinrichtung (4.1) eine berührungslos arbeitende Identifikationseinrichtung ist.

4. Bedieneinheit nach Anspruch 3, **dadurch gekennzeichnet, dass** die Identifikationseinrichtung eine Sende-/Empfangseinheit oder ein Transponder ist, welche berührungslos mit dem Gegengerät (3.1) des Identifikationssystems zusammen wirkt.

5. Bedieneinheit nach mindestens einem der vorgenannten Ansprüche, **dadurch gekennzeichnet, dass** das Gegengerät (3, 3.1) einen Lese- und/oder Schreibmodus besitzt, wodurch die Identifikationseinrichtung (3, 3.1) gelesen und /oder mit anlagen- und/oder personengebundenen Daten beschrieben wird.

6. Bedieneinheit nach Anspruch 5, **dadurch gekennzeichnet, dass** diese Daten in verschiedenen Röntgengeräten aufgezeichnet und zentral auf oder mittels der Identifikationseinrichtung (4, 4.1) zusammengefasst und abgespeichert werden.

7. Bedieneinheit nach mindestens einem der Ansprüche 1 bis 6, **dadurch gekennzeichnet, dass** das Gegengerät (4,4.1) im Bedienfeld (2) integriert ist.

8. Bedieneinheit nach einem oder mehreren der vorgenannten Ansprüche, **dadurch gekennzeichnet, dass** mit der Identifikationseinrichtung (4, 4.1) eine individuelle Geräteeinstellung und/oder eine Tastenverwaltung von Tasten (2.1) auf dem Bedienfeld (2) erfolgt.

9. Bedieneinheit nach einem oder mehreren der vorgenannten Ansprüche 1 bis 8. **dadurch gekennzeichnet, dass** dem Identifikationssystems zusätzlich ein Livescanner (20) vorgeschaltet Ist.

## Claims

1. Control unit (10) for X-ray inspection equipment, having a control panel (2) for operating an operating system of the X-ray inspection equipment and a monitor (1) for visualizing the X-ray image for an operator (6), with an identification system comprising reciprocal equipment (3, 3.1) and an identification device (4, 4.1) for the operator (6) being integrated in the control unit (10) of the X-ray inspection equipment which has the following features:
- the control unit (10) is unlocked or activated by the identification device (4, 4.1),
- the identification device (4) is a contact-bound or non-contact identification device, in which
- the identification device (4) is connected to the operator (6) by means of a mechanical connection (5) and
- if it is a non-contact connection, the latter is maintained between the identification device (4.1) and the reciprocal equipment (3.1) within an adjacent region (N) and
- if the adjacent region is left or the identification device is removed, the operator (6) is automatically logged off and the operating system is unlocked for a further operator, for which purpose the operating system is put into a standby mode, in which
- a so-called time-safety interval (Δt) is integrated in order to prevent an unwanted shutdown and so a shutdown is only effected once this time interval (Δt) has elapsed.

2. Control unit according to Claim 1, **characterized in that** the contact-bound identification device (4) is designed as a smartcard or a magnetic stripe card and a card reader acts as reciprocal equipment (3).

3. Control unit according to Claim 1, **characterized in that** the identification device (4.1) is an identification device which operates without contact.

4. Control unit according to Claim 3, **characterized in that** the identification device is a transmitter/receiver unit or a transponder, which interacts without contact with the reciprocal equipment (3.1) of the identification system.

5. Control unit according to at least one of the preceding claims, **characterized in that** the reciprocal equipment (3, 3.1) has a read and/or write mode, as a result of which the identification device (3, 3.1) can be read and/or system- and/or person-related data can be written thereon.

6. Control unit according to Claim 5, **characterized in that** this data is recorded in various X-ray equipment and is combined and stored centrally on or by means of the identification device (4, 4.1).

7. Control unit according to at least one of Claims 1 to 6, **characterized in that** the reciprocal equipment (4, 4.1) is integrated in the control panel (2).

8. Control unit according to one or more of the preceding claims, **characterized in that** the identification device (4, 4.1) effects an individual equipment setting and/or key assignment of keys (2.1) on the control panel (2).

9. Control unit according to one or more of the preceding Claims 1 to 8, **characterized in that** a live scanner (20) is additionally connected upstream of the identification system.

## Revendications

1. Unité de commande (10) pour un appareil de test par rayons X, comportant un tableau de commande (2) permettant de commander un système de commande d'appareil de test par rayons X ainsi qu'un dispositif de surveillance (1) permettant à une personne utilisatrice (6) de visionner l'image radiographique, un système d'identification, composé d'un appareil opposé (3, 3.1) et d'un dispositif d'identification (4, 4.1) étant raccordé pour la personne utilisatrice (6) se trouvant dans l'unité de commande (10) de l'appareil de test par rayons X, avec les caractéristiques suivantes:
- l'unité de commande (10) est déverrouillée et/ou activée par le dispositif d'identification (4, 4.1) ;
- le dispositif d'identification (4) est un dispositif d'identification avec ou sans contact ;
- le dispositif d'identification (4) étant relié à la personne utilisatrice (6) par une liaison mécanique (5) ; et
- s'il s'agit d'une liaison sans contact, celle-ci est maintenue entre le dispositif d'identification (4.1) et l'appareil opposé (3.1) à l'intérieur d'une zone proximale (N) ; et
- si l'on quitte la zone proximale ou si l'on enlève le dispositif d'identification, la personne utilisatrice (6) est automatiquement déconnectée et le système d'exploitation est déverouillé pour une autre personne utilisatrice se produisant, faisant que le système d'exploitation est actionné dans un état de secours ;
- un intervalle de temps de sécurité (Δt) étant intégré pour éviter une déconnexion involontaire de sorte qu'une déconnexion ne se produit qu'une fois cet intervalle de temps (Δt) écoulé.

2. Unité de commande selon la revendication 1, **caractérisée en ce que** le dispositif d'identification (4) avec contact prend la forme d'une carte à puce ou d'une carte magnétique et **en ce qu'**un appareil à carte sert d'appareil opposé (3).

3. Unité de commande selon la revendication 1,
**caractérisée en ce que** le dispositif d'identification (4.1) est un dispositif d'identification sans contact.

4. Unité de commande selon la revendication 3,
**caractérisée en ce que** le dispositif d'identification est une unité émettrice/réceptrice ou un transpondeur qui interagit sans contact avec l'appareil opposé (3.1) du système d'identification.

5. Unité de commande selon au moins l'une quelconque des revendications précédentes, **caractérisée en ce que** l'appareil opposé (3, 3.1) possède un mode de lecture et/ou écriture, ce qui permet de lire les données contenues dans le dispositif d'identification (4, 4.1) et/ou d'écrire des données liées aux installations et/ou aux personnes.

6. Unité de commande selon la revendication 5, **caractérisée en ce que** ces données sont utilisées dans différents appareils à rayons X et rassemblées ou mémorisées de façon centralisée ou à l'aide du dispositif d'identification (4, 4.1).

7. Unité de commande selon au moins l'une quelconque des revendications 1 à 6, **caractérisée en ce que** l'appareil opposé (3, 3.1) est intégré dans le tableau de commande (2).

8. Unité de commande selon au moins l'une quelconque des revendications précédentes, **caractérisée en ce qu'**une position individuelle de l'appareil et/ou une gestion des touches (2.1) sont réalisées sur le tableau de commande (2) avec le dispositif d'identification (4, 4.1).

9. Unité de commande selon au moins l'une quelconque des revendications 1 à 8, **caractérisée en ce qu'**un dispositif de lecture en direct (20) est en outre connecté en amont du système d'identification.
